# EUROPEAN PATENT APPLICATION

(11) **EP 3 736 423 A1**
(43) Date of publication of application: **11.11.2020**
(21) Application number: 20170597.7
(22) Date of filing: 21.04.2020
(51) Int. Cl.: F02C 6/00, F02K 5/00

(54) **HYBRID ELECTRIC AIRCRAFT PROPULSION SYSTEM**

(30) Priority: 09.05.2019 GB 201906526
(71) Applicant: Rolls-Royce plc, London N1 9FX (GB)
(72) Inventor: Razak, Ahmed, Derby DE24 8BJ (GB); Husband, Stephen, Derby DE24 8BJ (GB)
(74) Representative: Rolls-Royce plc

(57) **Abstract**

A hybrid aircraft propulsion system (14). The system (14) comprises a gas turbine engine (16) having a turbine system (30a, 30b, 34) comprising first and second turbine sections (30a, 30b). The gas turbine engine (16) further comprises a first combustor (26) provided upstream in core flow from the turbine system (30a, 30b, 34), and a second combustor (32) provided between the first and second turbine sections (30a, 30b). The hybrid aircraft propulsion system further comprises an energy storage system (74) and an electric propulsion system (72) electrically coupled to the energy storage system (74).

## Description

The present disclosure concerns a propulsion system for a hybrid electric aircraft, and an aircraft comprising the propulsion system.

Traditionally, aircraft have been propelled by one or more propulsors such as fans or propellers driven by internal combustion engines such as gas turbine engines or piston engines. Conventionally, the propulsor is driven by a direct drive shaft, or a reduction gearbox.

Recently, it has been proposed to provide an electric motor to drive the propulsor, with power for the electric motor being provided by a generator driven by the internal combustion engine. Such a system is known as a "hybrid electric propulsion system". In "parallel hybrid" systems, a shaft is provided between the generator and the propulsor, such that power can be transmitted from the generator to the propulsor mechanically, in addition to electrically via the motor and generator. In "series" systems, the shaft is omitted, such that propulsive power is provided by the motor alone. A battery or other power storage unit may also be provided to store excess power generated by the internal combustion engine driven generator, and to provide additional electrical power for high load cases. The present disclosure relates to such a hybrid electric propulsion system.

According to a first aspect there is provided a hybrid aircraft propulsion system comprising:
a gas turbine engine comprising:
   a turbine system comprising first and second turbine sections;
   a first combustor provided upstream in core flow from the turbine system; and
   a second combustor provided between the first and second turbine sections;
the hybrid aircraft propulsion system further comprising:
   an energy storage system; and
   an electric propulsion system electrically coupled to the energy storage system.

Advantageously, by providing a hybrid aircraft is provided which provides for more energy efficient operation over a wide variety of aircraft mission ranges, whilst minimising battery size requirements.

The electric propulsion system may comprise an electrical generator coupled to the energy storage system. The electric generator may be coupled to the turbine system. The electric propulsion system may comprise a propulsor mechanically coupled to the turbine system.

The electric generator may comprise a motor-generator, and may be coupled to both the turbine system and the propulsor. Advantageously, the functions of the electrical generator and the motor of the electric propulsion system are combined in one unit.

The propulsor may be coupled to the turbine system via a reduction gearbox.

The reduction gearbox may comprise an epicyclic gearbox comprising a sun gear, planet gears mounted to a planet carrier, and a ring gear. The epicyclic gearbox may comprise a differential epicyclic gearbox. The sun gear may be mechanically coupled to the turbine system. The electric motor may be coupled to one of the planet carrier and the ring gear, and the propulsor may be coupled to one of the ring gear and the planet carrier.

The epicyclic gearbox may comprise one or more clutches or brakes. The epicyclic gearbox may comprise one or more of a sun gear brake configured to prevent rotation of the sun gear when actuated, a planet carrier brake configured to prevent rotation of the planet carrier when actuated, and a ring gear brake configured to prevent rotation of the ring gear when actuated.

The propulsor may be mechanically isolated from the turbine system, and may be arranged to be driven only by the electric motor.

The gas turbine engine may comprise a compressor coupled to the turbine system. The turbine system may comprise a low pressure turbine and a high pressure turbine. The gas turbine engine may comprise a low pressure compressor coupled to the low pressure turbine by a low pressure shaft, and may comprise a high pressure compressor coupled to the high pressure turbine by a high pressure shaft.

The second combustor may be provided between turbine sections of the turbine. Alternatively, the second combustor may be provided between the high pressure turbine and the low pressure turbine.

According to a second aspect of the invention there is provided an aircraft comprising a propulsion system according to the first aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a plan view of an aircraft incorporating a propulsion system
**Figure 2** is a schematic side view of a first propulsion system for the aircraft of figure 1;
**Figure 3** is a schematic side view of part of the first propulsion system of figure 2;
**Figures 4a and 4b** are graphs showing specific fuel consumption plotted against engine power for a conventional aircraft engine and the propulsion system of figure 2 respectively;
**Figures 5a and 5b** are graphs showing thrust contributions from a turbine and from a motor of the propulsion system of figure 2 plotted against time power for short range and long range mission profiles respectively;
**Figure 6** is a schematic side view of a second propulsion system for the aircraft of figure 1;
**Figure 7** is a schematic front view of a reduction gearbox of the propulsion system of figure 6; and
**Figure 8** is a schematic side view of the reduction gearbox of figure 4; and
**Figure 9** is a schematic side view of a third propulsion system for the aircraft of figure 1.

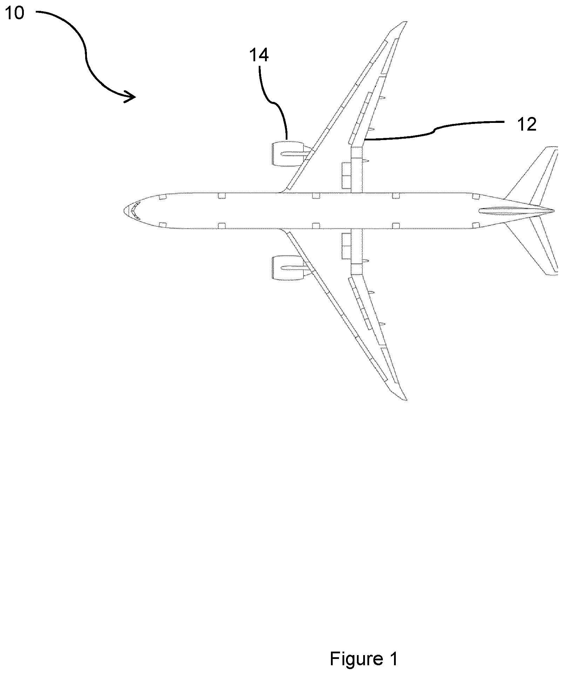

With reference to Figure 1, an aircraft 10 is shown. The aircraft 10 comprises a pair of wings 12, each having a propulsion system 14 in a podded installation.

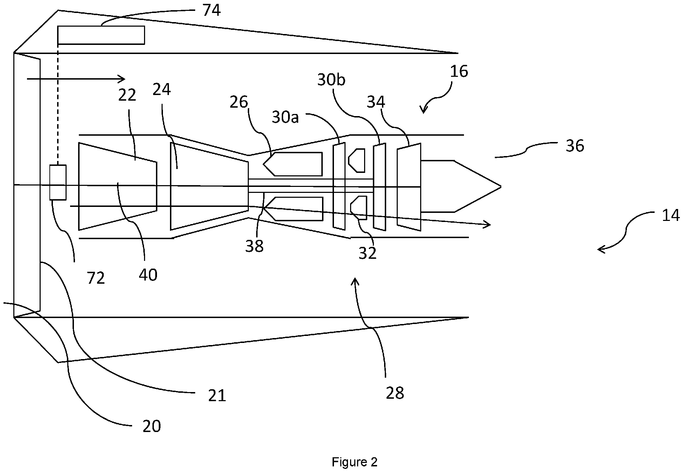

A first propulsion system 14 for use in the aircraft 10 is shown schematically in more detail in figure 2. The propulsion system 14 comprises a gas turbine engine 16 having a principal and rotational axis. The gas turbine engine 16 comprises, in axial flow series, an air intake 20, a propulsive fan 21, a low pressure compressor 22, a high pressure compressor 24, a first combustor 26, a high pressure turbine 28 comprising a first high pressure turbine section 30a, a second combustor 32, a second high pressure turbine section 30b of the high pressure turbine 28, a low pressure turbine 34, and an exhaust nozzle 36.

In operation, air entering the intake 20 is directed to the low pressure compressor 22, which compresses the air flow directed into it before delivering that air to the high pressure compressor 24, which compresses the air flow further. This air flow is then directed to the first combustor 26 where it is mixed with fuel and the mixture combusted. The resultant hot combustion products then expand through, and thereby drive the first high pressure turbine section 30a of the high pressure turbine 28, before entering the second combustor 32. In the second combustor 28, the further fuel is added and burnt, thereby increasing the temperature of the combustion products further. The combustion products are then directed to the second high pressure turbine section 30b of the high pressure turbine 28 where they are again expanded, before being passed to the low pressure turbine 34 where the combustion gases are expanded further, before being expelled by the nozzle 36.

Both the first and second stages 30a, 30b of the high pressure turbine 30a, 30b and high pressure compressor 24 are coupled together by a core shaft 38, such that the high pressure turbine 30a, 30b drives the high pressure compressor 24. The low pressure turbine 34, fan 21, and low pressure compressor 22 are coupled together by a low pressure shaft 40, such that the low pressure turbine 24 drives the low pressure compressor 24 and fan 21.

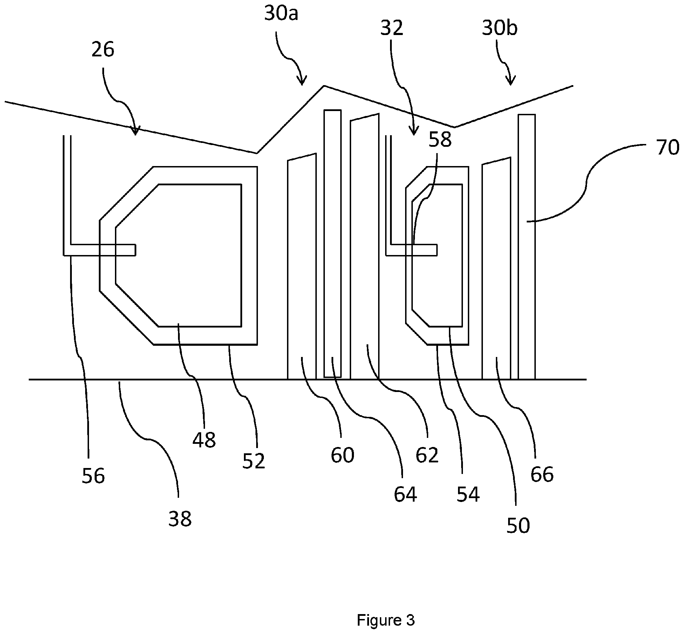

Figure 3 shows the first combustor 26, high pressure turbine 28 and second combustor 32 in more detail.

As can be seen, each combustor 26, 32 is relatively conventional, and each comprises an inner combustor liner 48, 50 surrounded by an outer combustor casing 52, 54. Each combustor 26, 32 further comprises a respective fuel injector 56, 58, which provides fuel such as aviation fuel or diesel, for burning within the gas flow. Alternative combustor types may also be utilised, such as reverse flow combustors, lean burn staged combustors, and Rich-Quench-Lean (RQL) combustors.

Each turbine section 30a, 30b of the high pressure turbine 28 comprises at least one turbine stage. Each turbine stage comprises a turbine rotor, and optionally, one or more turbine stators. As shown, the first turbine section 30a comprises two turbine stages. A first turbine stage comprises a first turbine rotor 60, while a second turbine stage comprises a stator 64 followed by a rotor 62 in flow series. It will be understood though that in a turbine stage, the stator may be provided upstream of the rotor, or a stator may be provided either side of the stator. In any case, the number of turbine stages can be determined by counting the number of turbine rotors. Similarly, the second turbine section comprises a single turbine stage 30b comprising a rotor 66 and stator 70. In use, the turbine rotors 60, 62, 66 (which are conventionally bladed rotors), rotate to provide motive power, while the stators 64, 70 redirect gas flow downstream or upstream of each rotor to guide the gas flow to the next rotor. As can be seen, in this case, the first turbine and second turbine sections 30a, 30b are provided as part of a first spool, coupled to the first shaft 38, and so rotate together in operation.

Referring again to figure 2, the low pressure shaft 40 is also coupled to a motor / generator 72. The motor / generator is an electric machine configured to operate in a motoring mode, in which electric power is provided to the electric machine to generate torque, and a generating mode, in which torque may be converted into electric power by the electric machine 72. It will be understood however that the generating mode may be optional, with the electric machine operating only as a motor. The electric machine is also electrically coupled to a power storage unit 74, which may be in the form of a chemical battery. Consequently, an electric propulsion system comprising the gas turbine engine 16, motor / generator 72 and energy storage device 74 is provided.

In operation, the electric machine 72 can be used to supplement motive power provided by the turbine 34 to the fan 21, using energy provided from the battery 74, and can be used to optionally generate electric power, which can be stored by the battery 74.

Consequently, in use, propulsive power from the propulsion system 14 is provided from a mix of two sources - turbine power from the turbines 30a, 30b, 34, and electric power from the motor 72 and batteries 74. In either case, the propulsive power is transmitted to the fan 21.

In a conventional gas turbine engine (i.e. one having a single combustor), the energy efficiency (measured either in terms of core thermal efficiency η, or thrust specific fuel consumption, SFC) degrades as thrust is reduced. In other words, thermal efficiency decreases, while SFC increases.

This is in part because of the reduced shaft speeds that result where combustor fuel flow is reduced for reduced thrust. This in turn results in lower compressor 22, 24 compression ratios, due to the slower compressor speeds N1, N2. Since thermal efficiency of a heat engine is highly dependent on compression ratio, thermal efficiency drops, and so fuel consumption increases for a given thrust.

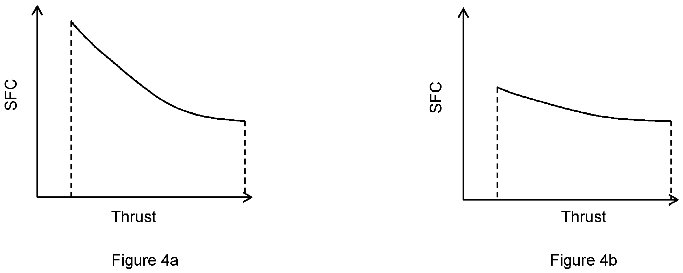

This is shown in figure 4a. In this figure, thrust specific fuel consumption is plotted against thrust for a conventional engine having a single combustor (not shown). As can be seen, the SFC increases as thrust is reduced, i.e. efficiency is degraded.

Figure 4b shows a similar plot for the engine 16 of figure 2. As can be seen, the SFC at lower thrust levels is significantly lower, i.e. the engine burns less fuel. This is because thrust can be reduced by reducing the second combustor 32 fuel flow. This reduces overall thrust, since lower temperature gasses are available for the downstream turbines, i.e. turbines 30b, 34. However, the pressure ratio across the first turbine section 30a increases, in view of the lower pressure downstream. Consequently, this compensates for the lower pressure ratio across the second turbine section 30b, thereby maintaining the high pressure shaft 38 at a relatively high speed N2, and so compression ratio is maintained at a high level, and therefore SFC is maintained at a low level.

Such a system has relatively little advantage in a conventional aircraft in which the only source of power is the turbines. This is because full engine power is required for the majority of the flight. For example, in a civil aircraft, full engine power is required for takeoff, in order to provide for maximum acceleration. High power is then maintained for climb, to reach high altitude. As altitude increases, the thrust available from the engines falls (a phenomenon known as "thrust lapse"), and so power levels are maintained at a high level. Power is only reduced for descent and landing. At this point, substantially no thrust is required, and so the only important consideration is idle thrust fuel consumption, which may not be significantly improved by providing a second combustor. Meanwhile weight is increased by such a system, which may eliminate any advantage.

By introducing a battery and an electric motor which assist the fan 21 however, this situation is changed greatly.

In operation, the same aircraft will typically be utilised for a variety of different missions, having different take-off weight, range, altitude and speed requirements. The aircraft is designed to accommodate the most challenging of these projected missions, which will typically be where the aircraft is operated at a high weight, and for a long range. For example, the Boeing 737 is design for ranges in excess of 3,000 miles. However, these aircraft are frequently used for stage lengths of 500 miles or even less.

In order to minimise operational costs, it is desirable to fully utilise the electric power stored by the battery. This is because, unlike fuel, the battery 74 weight does not decrease as it is used, and so it must be carried for the full flight regardless of how much of the energy is used. Furthermore, electricity is generally available at a lower cost than jet fuel, and typically has a lower carbon footprint. However, typically, batteries have a relatively low power density, and so it is not feasible to power an aircraft wholly electrically for long ranges. Consequently, battery power cannot be wholly relied upon for longer range missions.

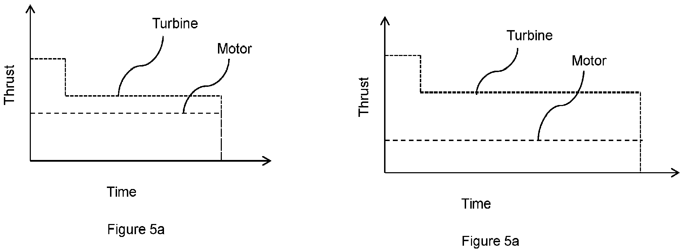

Consequently, it is desirable to use the electric motor 72 to provide a larger portion of the aircraft propulsive needs on short range missions, than on long ranges. Figures 5a and 5b show typical usage for two projected missions.

Figure 5a shows a relatively short mission, at a low take-off weight. As can be seen, a relatively low total take-off thrust (i.e. the thrust from the turbine 30a, 30b, 34) added to the thrust from the motor (72)) is required, due to the lower weight, in part because of the smaller fuel load. Thrust is reduced somewhat for cruise. As can be seen, at both take-off and particularly at cruise, the turbine 30a, 30b, 34 is run at a relatively low thrust, so that the motor 72 can be used to provide the balance of the power.

Figure 5b shows a relatively long range missions, at a higher take-off weight. In this case, a higher total thrust is required. A large portion of the thrust is provided by the turbine 30a, 30b, 44, with the motor 72 providing a lower thrust, as well as a lower proportion of the total thrust. This is so that the total area under the motor line is the same, i.e. the total energy used by the motor 72 is the same, which is restricted by the total amount of energy stored by the battery 74.

Consequently, the thrust requirements for the turbine 30a, 30b, 34 depend greatly on the desired range for the particular mission being flown. Consequently, in an aircraft having a battery power assisted fan, but a conventional gas turbine engine having the SFC profile shown in figure 4a, the fuel efficiency of the engine would be very low for the short mission ranges. Consequently, the overall fuel burn would be relatively high, thereby potentially increasing the total energy usage of the aircraft, and thereby reducing or eliminating the benefit of the electric motor assistance.

In the propulsion system of the present disclosure however, the SFC is relatively low at low thrust levels, i.e. efficiency is high. Consequently, the propulsion system can be operated with a relatively low contribution from the gas turbine engine for short ranges, and still achieve high efficiencies. Consequently, a propulsion system is provided which has a high efficiency over a broad range of missions for a single hybrid electric aircraft.

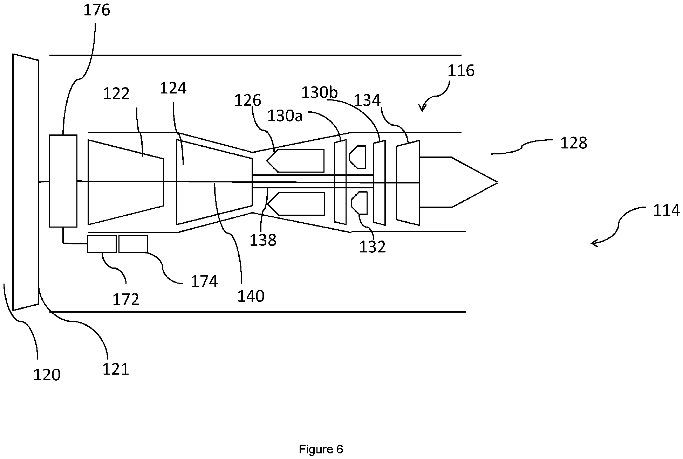

A second propulsion system 114 for use in the aircraft 10 is shown schematically in more detail in figure 6. The propulsion system 114 comprises a gas turbine engine 116 having a principal and rotational axis. The gas turbine engine 116 comprises, in axial flow series, an air intake 120, a propulsive fan 121, a low pressure compressor 122, a high pressure compressor 124, a first combustor 126, a high pressure turbine 128 comprising a first high pressure turbine section 130a, a second combustor 132, a second high pressure turbine section 130b, a low pressure turbine 134, and an exhaust nozzle 136.

Both the first and second stages 130a, 130b of the high pressure turbine 128 and high pressure compressor 124 are coupled together by a core shaft 138, such that the high pressure turbine 130a, 130b drives the high pressure compressor 124. The low pressure turbine 134, fan 121, and low pressure compressor 122 are coupled together by a low pressure shaft 140 via a reduction gearbox 176, such that the low pressure turbine 24 drives the low pressure compressor 24 and fan 21. The fan 121 is also coupled to a motor 172 via the reduction gearbox 176, with the motor 172 being provided with electrical power from a battery 174.

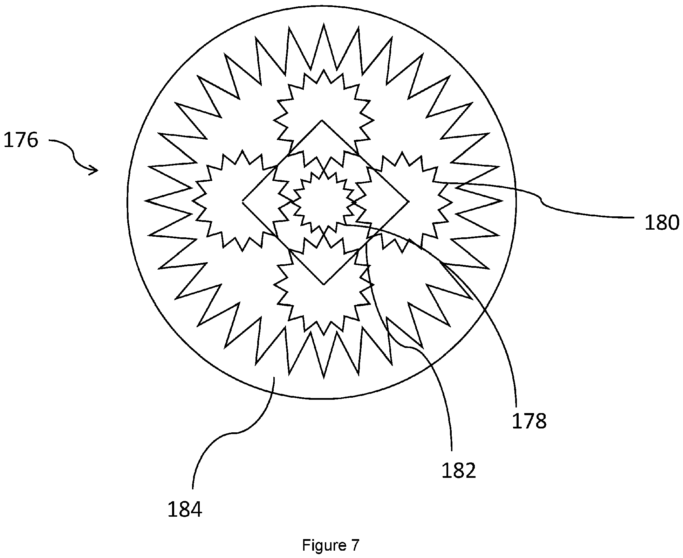

Figure 7 shows the reduction gearbox 176 in more detail. As can be seen, the gearbox is in the form of an epicyclic gearbox comprising an input sun gear 178, which meshes with a plurality of planet gears 180. Each planet gear 180 is mounted for rotation about a respective axis, and orbits about the sun 178. The planet gears 180 are mounted to a planet carrier 182. The planet gears 180 mesh with a ring gear 184, which surrounds the planet gears 180.

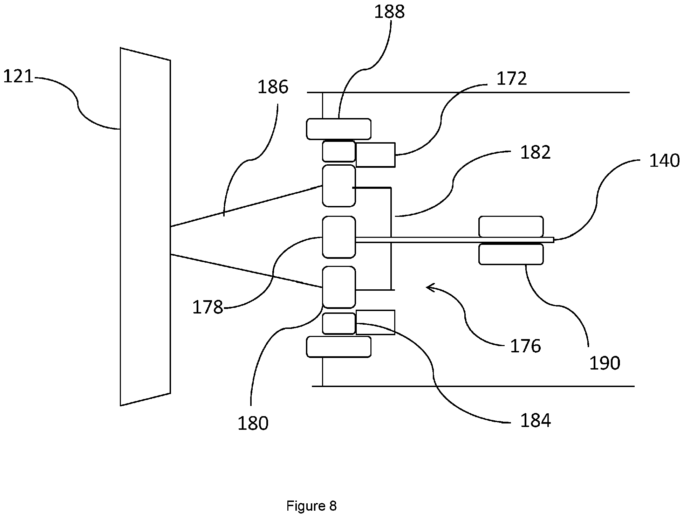

The operation of the gearbox 176 is shown in figure 8. The sun gear 178 is coupled to the low pressure turbine shaft 140, which provides input power. The fan 121 is mounted to the planet carrier 182 via an output shaft 186. The electric motor 172 is coupled to the ring gear 184. First and second brakes 188, 190 are provided. The first brake 188 is configured to prevent rotation of the ring gear 184 relative to a ground, while the second brake 190 is configured to prevent rotation of the input shaft 140.

Consequently, the gearbox 176 allows for several operating modes. In a first mode, the gas turbine engine 116 is activated, with fuel being provided to the first and / or second combustors 126, 132, and the low pressure shaft 140 being allowed to rotate. The first and second brakes 188, 190 are released, such that the sun gear 178, planet gears 180 and ring gear 184 are each allowed to rotate, with the planet gears 108 and planet carrier 182 also being permitted to orbit the sun 178. In this mode of operation, the gearbox 176 operates as a differential, which transmits torque from both the electric motor 172 and the turbine 134 to the fan 121. The speed of the fan 121 and the power split between the turbine 134 and motor 172 are controlled by the relative torque input provided by the two power sources. Meanwhile, the gearbox provides for a speed reduction of the fan 121 relative to the low pressure shaft 140. This allows for operation in a mixed mode, in which the motor 172 and gas turbine engine 116 both contribute to power generation.

In a second operating mode, the motor 172 is turned off, the first brake 188 is applied, and the second brake 190 is released. In this mode, the gearbox 176 operates as a planetary reduction drive, with the ring gear 184 and motor 172 being static. This allows for operation in a "gas turbine only mode", in which the motor 172 does not contribute to power generation.

In a third operating mode, the first brake 188 is released, the second brake 190 is applied, and the gas turbine engine 116 is shutdown. In this mode, the motor 172 drives the fan 121 via the ring gear 184, planet gears 180 and planet carrier 182. Consequently, this allows for operation in a "motor only mode", in which the gas turbine engine 116 does not contribute to power generation.

Consequently, in this embodiment, a wide range of flexibility can be provided, which enables for different modes of operation.

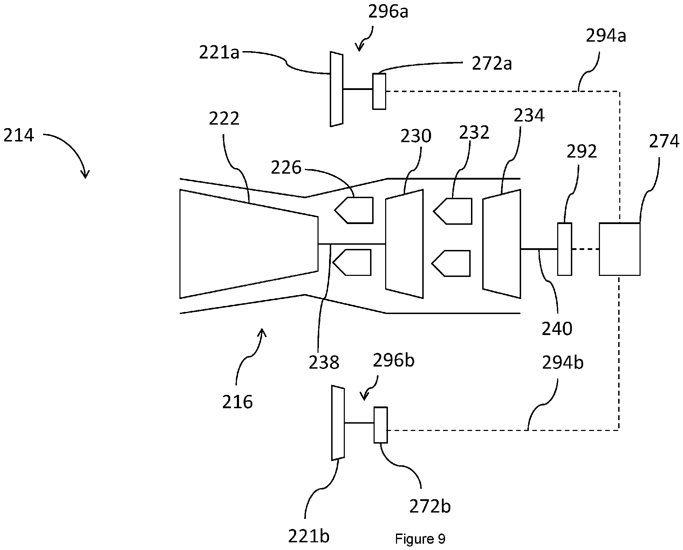

Figure 9 illustrates a third propulsion system 214 for use with the aircraft 10 in figure 1.

The propulsion system 214 includes a gas turbine engine 216. The engine 216 comprises a compressor 222, a first combustor 226, and a first turbine section 230 in flow series. The first compressor 222 and first turbine section 230a are coupled by a core shaft 238 to form a core engine spool. The gas turbine engine 216 further comprises a second turbine section 234 downstream in flow series of the first turbine section 230, which is coupled to a generator 293 by a separate, independently rotatable shaft 240, to form a free power spool. In use, the gas turbine engine 216 operates in a conventional manner, to drive the core spool and the free power spool to generate electrical power. Notably, the gas turbine engine 216 lacks a fan or propeller directly coupled to either shaft 238, 240, and so acts only as a source of motive power for the generator 292, with a small amount of residual thrust being produced by the gas turbine engine core exhaust.

The generator 292 is electrically coupled to a power storage device in the form of a battery 274. The battery 274 is in turn coupled to first and second electric propulsors 296a, 296b via respective electrical interconnectors 294a, 294b.

Each electric propulsor 296a, 296b comprises a respective electric motor 272a, 272b and a respective fan 221a, 221b. Notably, there is no direct physical connection between the engine shafts 238, 240 and the propulsive fans 221a, 221b - rather, these are powered indirectly via electricity generated by the generator 292, and stored by the batteries 274. Such an arrangement is known as a "series-hybrid".

Again, during flight, electrical power is produced by the gas turbine engine 216 and stored by the battery 274. The amount of energy produced by the gas turbine as a proportion of the energy stored by the battery 274 will again depend on range, and so the power generated by the gas turbine engine 216 will depend on the operating range of the aircraft 10 for a given mission. Consequently, the two-combustor system, which has a high efficiency over a large power range compared to conventional engines, is particularly suitable for such an aircraft.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

For example, the number of turbines, turbine stages, compressor stages and compressor types (e.g. axial flow or centrifugal flow) could be chosen as necessary.

For example, a third combustor could be added to the heat engines of either of the first or second embodiment. Similarly, the first embodiment could comprise an intercooler comprising a heat exchanger configured to reject heat between compression stages. Similarly, the number or arrangement of shafts could be changed, so that the second combustor could be located between different turbine sections of the same spool, or of different spools in each of the embodiments, depending on requirements. Similarly, where multi-stage turbine spools are provided, the second combustor could be located between any two stages.

## Claims

1. A hybrid aircraft propulsion system (14) comprising:
a gas turbine engine (16) comprising:
a turbine system (30a, 30b, 34) comprising first and second turbine sections (30a, 30b);
a first combustor (26) provided upstream in core flow from the turbine system (30a, 30b, 34); and
a second combustor (32) provided between the first and second turbine sections (30a, 30b);
the hybrid aircraft propulsion system further comprising:
an energy storage system (74); and
an electric propulsion system (72) electrically coupled to the energy storage system (74).

2. A system according to claim 1, wherein the electric propulsion system comprises a generator (72, 292) coupled to the energy storage system (74, 274).

3. A system according to claim 2, wherein the electric generator (72, 292) is coupled to the turbine system (30a, 30b, 34, 230a, 230b).

4. A system according to any of the preceding claims, wherein the electric propulsion system comprises a propulsor (21) mechanically coupled to the turbine system (30a, 30b, 34).

5. A system according to any of claims 2 to 4, wherein the electric generator comprises a motor-generator (72), coupled to both the turbine system (30a, 30b, 34) and the propulsor (21), and may be coupled via a reduction gearbox.

6. A system according to claim 5, wherein the reduction gearbox comprises an epicyclic gearbox (176) comprising a sun gear (178), planet gears (180) mounted to a planet carrier (182), and a ring gear (184).

7. A system according to claim 6, wherein the sun gear (178) is mechanically coupled to the turbine system (130a, 130b), the electric motor (172) is coupled to one of the planet carrier (182) and the ring gear (184), and the propulsor (121) is coupled to one of the ring gear (182) and the planet carrier (182).

8. A system according to one or claim 6 and claim 7, wherein the epicyclic gearbox (176) comprises one or more clutches or brakes (188, 190).

9. A system according to claim 7, wherein the epicyclic gearbox (176) comprises one or more of a sun gear brake (190) configured to prevent rotation of the sun gear (178) when actuated, a planet carrier brake configured to prevent rotation of the planet carrier (182) when actuated, and a ring gear brake (188) configured to prevent rotation of the ring gear (184) when actuated.

10. A system according to any of claims 2 to 4, wherein the propulsor (221) is mechanically isolated from the turbine system (230a, 230b), and is arranged to be driven only by the electric motor (272).

11. A system according to any of the preceding claims, wherein the gas turbine engine (16) comprises a compressor (22, 24) coupled to the turbine system (30a, 30b, 34).

12. A system according to any of the preceding claims, wherein the turbine system (30a, 30b, 34) comprises a low pressure turbine (34) and a high pressure turbine (30a, 30b).

13. A system according to any of the preceding claims, wherein the second combustor (32) is provided between turbine sections (30a, 30b) of the turbine (30a, 30b).

14. A system according to claim 12, wherein the second combustor (232) is provided between the high pressure turbine (230) and the low pressure turbine (234).

15. An aircraft (10) comprising a propulsion system (14) in accordance with any of the preceding claims.
